# EUROPEAN PATENT APPLICATION

(11) **EP 1 111 884 A2**
(43) Date of publication of application: **27.06.2001**
(21) Application number: 00660215.5
(22) Date of filing: 27.11.2000
(51) Int. Cl.: H04M 1/725

(54) **A method and a device for reminding of an unanswered call**

(30) Priority: 21.12.1999 FI 992752
(71) Applicant: NOKIA MOBILE PHONES LTD., 02150 Espoo (FI)
(72) Inventor: Ketola, Pekka, 33720 Tampere (FI); Liukkola-Olmiala, Tea, 90940 Jääli (FI); Ruutikainen, Petri, 33100 Tampere (FI); Väänänen-Vainio-Mattila, Kaisa, 33800 Tampere (FI)
(74) Representative: Johansson, Folke Anders

(57) **Abstract**

A method and a device for reminding of an unanswered call, in which method a call comes into a mobile phone, the method comprising identifying the telephone number of the caller from the call that comes into the mobile phone in identification means (18), leaving the call unanswered, transferring the information referring to the telephone number of the caller of the unanswered call into a memory unit (20), and reminding the user of the unanswered call at a later point of time.

## Description

The present invention relates to a method and a device for reminding of an unanswered call.

### Background of the Technology

When using a mobile phone there often occur situations where the person receiving is unable to answer an incoming call. In public switched phones, it is already enough for this kind of situation that the recipient is not in the vicinity of a telephone device. Mobile phones have provided people with an opportunity to be within reach all the time. After the problem of physical reachability was solved, mental reachability has become a new problem. Although the recipient would always carry with him a mobile phone, there still occur situations where he is either unable or unwilling to answer an incoming call. These kinds of situations are, for example, important meetings, negotiations and leisure-time activities.

As a known solution to the problem in these kinds of situations, an automatic telephone answering set is generally used, which in the case of mobile phones can be implemented by a separate answering unit to be attached to the mobile phone or as a service provided by a mobile phone operator at a mobile services switching centre. In addition, in the case of mobile phones, in many mobile communication systems the telephone number of a caller simultaneously remains, when the call is left unanswered, in the register of unanswered calls in the memory unit of the mobile phone, and a notice of the unanswered call will appear on the display of the mobile phone. The user may later retrieve the telephone number of the unanswered call from the register of unanswered calls, for example, by acknowledging the notice of the unanswered call as received from the user interface of the mobile phone. However, when the user rejects an incoming call, for example, by pressing the on-hook key (call ending key), a note of the call that came in goes into the register of received calls and not into the register of unanswered calls. When the user rejects an incoming call, no reminder text will either appear on the display of the mobile phone of a call that came in, but was left unanswered. The presented solutions are known, for example, from Nokia's mobile phone series 5100 and 6100.

In the solution presented above, the problem is, however, that after once opening the register of unanswered calls the user of the phone will no more get a reminder of his unanswered calls. One unanswered call does not cause a major problem, but as the number of unanswered calls increases, it will become difficult to remember to answer all the calls. Another problem is that there are n pieces of memory locations in the "unanswered calls" register, where n typically is 10-20. Said register being full when a new unanswered call comes into the register, the number of which is not already in the register, the last number in the register will be removed. Additional problems are also caused by the storing of the telephone numbers of unanswered and rejected calls in different registers although, in both cases, the call was not answered. For example, for a businessman, the consequences of forgetting to answer an unanswered call may be serious wherefore it is well founded to contribute to it that all unanswered calls will be answered.

### Summary of the Invention

Now, a method and a device have been invented for reminding a user of a mobile phone of an unanswered call.

According to a first aspect of the invention, there is implemented a mobile phone comprising means for receiving a call, identification means for identifying the caller number from the call that comes into the device, a clock for determining the course of time, and a memory unit for storing information, characterised in that there is a functional connection between the identification means and the memory unit, the identification means are arranged to transfer the information referring to the number of the caller of an unanswered call into the memory unit on the basis of a first response when the call is not answered, and the memory unit is arranged to remind the user of the mobile phone of the unanswered call, on the basis of a second response obtained from the clock, of the reaching of a specific point of time.

According to a second aspect of the invention, there is implemented a method for reminding of the answering of unanswered calls, in which method a call comes into a mobile phone, the telephone number of the caller is identified from the call that comes into the mobile phone, characterised in that the method comprises leaving the call unanswered, transferring the information referring to the telephone number of the caller of the unanswered call into a memory unit on the basis of a first response, and reminding the user of the unanswered call at a later point of time.

In a preferred embodiment of the invention, a clock, a calendar and a user interface that are in present mobile phones are utilised and, thus, they are part of said device for reminding of an unanswered call. With the help of the invention, it is easy to contribute to the answering of all unanswered calls and, hence, to contribute to it that no important contacts would be forgotten.

In the preferred embodiment of the invention, the telephone number of an unanswered call and/or other identification information referring to the call are automatically transferred into the electronic calendar of the device when there is a desire to be reminded of the unanswered call at a later point of time (in this connection, by reminding it is meant that there is a note of the matter to be reminded of in the memory unit of the mobile phone). The user does not have to separately write a reminder, which makes the use of the method and the device easier. Furthermore, in connection with getting a reminder, the user may on the basis of the identification information in the calendar relating to the unanswered call initiate a call to the number in question without separately having to start the call initiation procedures by looking up the telephone number in question in the phone directory or in the register of unanswered calls of the phone. Initiating a call directly from the calendar facilitates and speeds up the answering of unanswered calls.

The user may either himself separately determine, for example, in connection with leaving a call unanswered, whether or not the information on the unanswered call is transferred into the calendar for reminding to be effected at a later point of time, or the method and the device can be set to automatically transfer the information on unanswered calls into the calendar, or the method and the device can be set to only transfer the information on the telephone numbers of specific unanswered calls into the calendar for reminding. The calendar can be set to preferably remind the user in the form of a sound signal and a reminder text of an unanswered call that comes onto the display at a pre-determined point of time of reminding, which point of time of reminding the user may set himself, for example, when leaving a call unanswered, or the device can automatically set said point of time of reminding, for example, on the basis of settings made in advance.

According to the invention, the device can be set to also give said reminder of an unanswered call, for example, when the user changes the mode of operation of his mobile phone by changing the mode of the phone, for example, from silent to normal, or when the user separately requests a reminder of unanswered calls by a pre-determined command. The reminder can preferably be set to be given again at another later point of time if the user at the previous time of reminding did not call the unanswered call or he did not acknowledge the reminding function to be terminated as regards the unanswered call in question in connection with the previous reminder.

By the invention, a simple way is established to help remember to answer any unanswered calls. In the implementation of the invention, it is possible to utilise the clock, calendar and user interface that already exist in present mobile phones. The calendar can preferably give the user a reminder in the form of a sound signal. The reminding function can be initiated, for example, when the time passed has reached a pre-determined threshold value or when the user changes the mode of operation of his mobile phone, for example, from a silent mode into a normal mode.

Moreover, as the user can carry with him the mobile phone all the time he will be able to have reminders just about any time of day he wishes, i.e. during office hours as well as out of office hours, and during weekends and vacations.

In the following, the invention will be described in detail by referring to the enclosed drawings, in which
Figure 1 shows as a block diagram a device according to the invention for reminding of an unanswered call;
Figure 2 shows a data burst generally used in the transmission of information in wireless digital networks;
Figure 3 shows one implementation of a user interface when receiving a call;
Figure 4 shows a flow diagram of the functional progress of leaving a call unanswered;
Figure 5a shows a preferred implementation of the invention that utilises a calendar; and
Figure 5b shows an implementation for a reminder coming from a calendar through a display to a user on the basis of a pre-determined response.

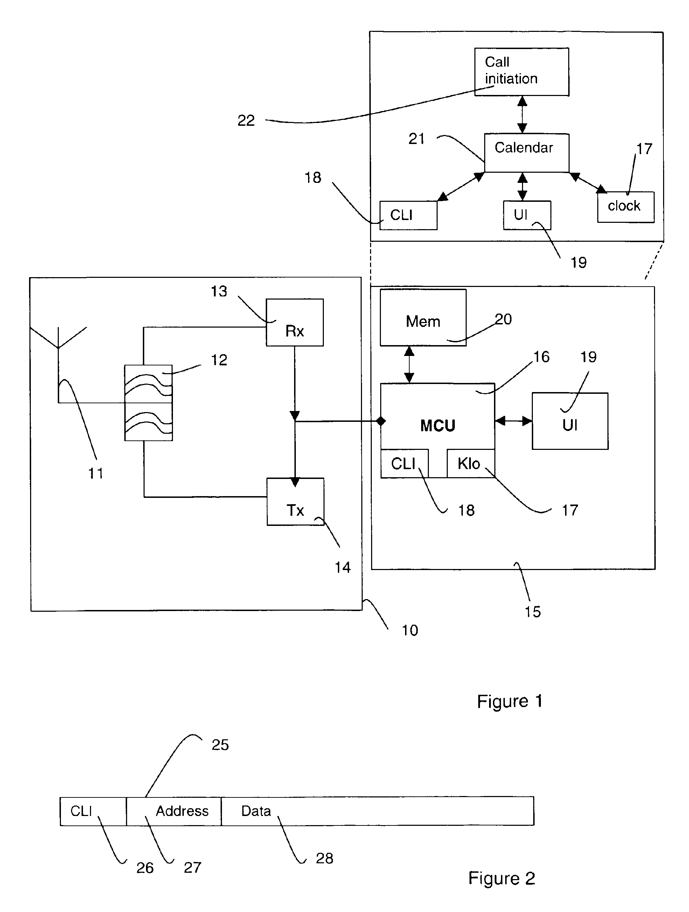

Figure 1 shows a device according to an embodiment of the invention, which comprises a transceiver part 10 and a device controlling part 15. The transceiver part includes an antenna 11, a Duplex filter 12, a receiving branch 13, and a transmitting branch 14. The transceiver part is connected with a unit (MCU, Master Controlling Unit) 16 located in the device controlling part 15 that controls the other parts, which is, e.g. a microprocessor. The unit 16 that controls the device is arranged to identify, on the basis of a program stored in a memory unit 20, the number of the caller from a CLI (Caller Line Identification) part 18 of the incoming data burst. Lower down, the figure shows the physical block diagram of the device controlling part 15 and farther up, the figure shows the functional block diagram of the device controlling part 15. The unit that controls the device further comprises a clock 17, e.g. the clock of a microprocessor, for determining the course of time and functions implemented by programs stored in the memory unit 20 for creating a call 22 and for recording a reminder in the memory unit 20. Said call creation function 22 is functionally connected with said memory unit so that it is possible to transfer from the memory unit a telephone number to the call creation function. The caller line identification application 18 is connected with the memory unit 20, wherein the information relating to an unanswered call can be stored. The caller line identification application 18 is also connected with a user interface 19 through which the user can control the function for reminding of the information stored in the memory unit.

Present wireless communication, for example, TDMA (Time-Division Multiple-Access) is based on transferring data bursts of short duration between a base transceiver station and a mobile phone. The use of such short bursts in the transmission of information enables several users to simultaneously communicate on the same frequency band. In wireless communication, where a frequency band is limited, this type of simultaneous multiple use of a band, based on data bursts, has proved useful.

Figure 2 shows in general said data burst 25 of this type. The data burst consists of a caller line, i.e. a so-called A-subscriber identification 26 (also known as CLI), which comprises the information on the telephone number of the caller and with the help of which information the mobile phone can open a connection with the phone of the caller of the incoming call. A data burst receiver, i.e. a so-called B-subscriber identification 27, which comprises the information on the telephone number of the recipient, with the help of which information the mobile phone of the recipient is able to identify the data bursts coming thereto. In addition, the data burst comprises transferable information 28. From the caller line identification 26, the telephone number of the caller can be found out by the caller line identification function of the unit that controls the device, on the basis of which the caller can be identified.

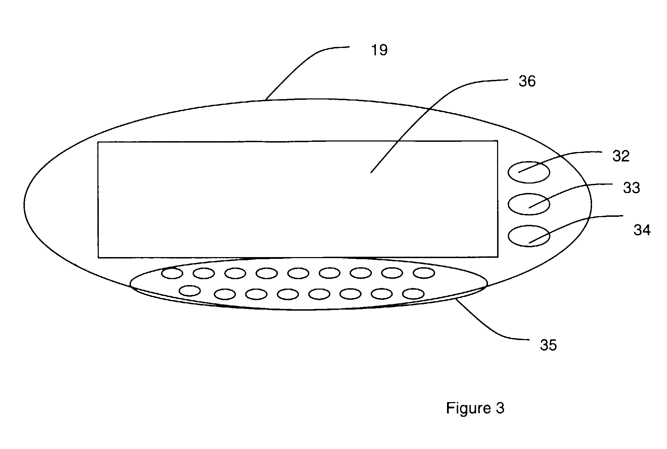

Figure 3 shows a preferred implementation for the user interface 19 of a device according to the invention, which comprises a selector 32 for answering an incoming call, a selector 33 for leaving an incoming call unanswered and for transferring for being reminded of at a later point of time, a selector 34 for leaving an incoming call unanswered without later being reminded of the unanswered call. Furthermore, the user interface comprises selectors 35 for changing the mode of operation of a mobile phone, for selecting the point of time of reminding and for pre-controlling the reminding function, and a display screen 36 for bringing a desired type of reminder text to be displayed to the user in connection with reminding of the unanswered call. Said selectors are, for example, keys that can be so-called SOFT keys, i.e. the function connected with the key is shown as a command on the display and further, said key may have several different functions depending on the mode of the device. Thus, for the above-mentioned selectors 32-34, the above-mentioned functions will be activated when a call comes into the device.

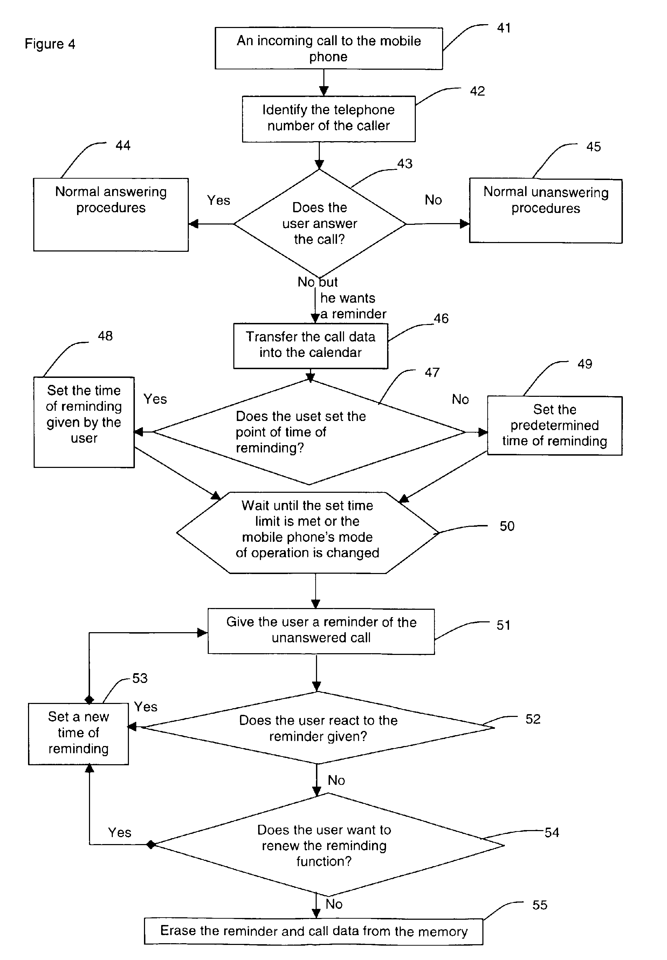

Figure 4 shows a flow diagram that illustrates one preferred implementation of a method according to the invention, in which method a call comes into a mobile phone (step 41), whereupon it receives a message of this, such as, e.g. the data burst 25 mentioned above. The telephone number of the caller is identified from the data burst by the caller line identification function in the unit controlling the device (step 42). When the call comes in, it is checked whether the user answers the incoming call or not (step 43). In the situation where the user answers the incoming call, by pressing the selector 32 a voice (call) connection is opened between the caller and the recipient (step 44). If the user rejects the incoming call by pressing the selector 34, whereupon he neither wants himself to be reminded of the unanswered call, the call set-up attempt is cut off and the information relating to the telephone number of the caller are transferred into the register of unanswered calls, wherein the telephone number of the caller in question can be found at a later stage (step 45).

In a situation where the user is unable to answer a call but, however, wants to be reminded of the unanswered call, by pressing the selector 33 the information relating to the telephone number of the caller is transferred into the register of unanswered calls and, at the same time, said number information is also transferred into the calendar (step 46) for reminding. Alternatively, if the user does not react in any way to an incoming call, the method and the device can preferably be pre-set to transfer in this kind of situation the information relating to the unanswered call, in addition to the register of unanswered calls, automatically into the calendar. This being the case, a notification will remain on the display of the mobile phone of the unanswered call, which information refers to new telephone numbers entered in the "unanswered calls" register, and the user will also get a reminder of the call left unanswered.

In a situation, where the user has been unable to answer a call but, however, has wanted to be reminded of the unanswered call, it is checked whether the user wants to set himself some point of time of reminding or whether the reminding delay pre-determined in the device will be used (step 47). If the user wants to set the point of time of reminding in connection with the selecting of the reminding function or later, the reaching of this point of time is set for being monitored (step 48). Alternatively, if the user does not determine the time of reminding or if the user has not originally reacted in any way to the incoming call, the pre-determined reminding delay is set as the time, the reaching of which will be monitored with the help of the clock of the device (step 49).

After setting the reminding delay, it will be waited that the time limit is reached or the user carries out through the user interface some pre-determined function that launches the reminder. Said pre-determined function could be, for example, the changing of the mode of operation of the mobile station, e.g. from a conference (call) mode (no sound, a notification of an incoming call by flashing the lights of the display) into a normal mode (notifying of an incoming call primarily with the help of the phone's ringing tone), whereupon the mobile phone knows that the meeting has ended and the user now has an opportunity to answer the calls that have come in, so the user can be shown a list of the calls that have come in. Said second pre-determined function could be the giving of some command to the mobile phone from the user interface by pressing some selector, whereupon the mobile phone knows that the user has, for example, returned from a run and is now more prepared to answer the calls that have come in, so the user can be given a reminder of the calls that have come in, or the giving of a pre-determined reminding command to the mobile phone, whereupon the mobile phone knows that exactly at that moment the user wants to be reminded of the unanswered calls. Switching on the current in the mobile phone could also be one possible pre-determined function, whereupon the mobile phone knows that the user is, for example, awake (if he is accustomed to keeping his mobile phone switched off at nights) and, thus, ready to answer the calls that have come in, so the user can be given a reminder of the unanswered calls (step 50).

When one of the above mentioned situations occurs, the user is preferably given a reminder of an unanswered call, for example, using one of the following methods or some combination of these methods: through a sound signal, if the mobile phone is not in a silent mode; with a reminder text that appears on the display screen; through light signals that appear on the display screen of the mobile phone; through tactile alerts of the mobile phone (step 51).

In connection with giving a reminder and thereafter, it is monitored whether the user reacts in any way to the reminder, for example, by switching off the reminding function in the middle or by calling the number that is the object of the reminder (step 52). If the user does not react in any way to the reminder, the device will set a new pre-determined reminding delay (step 53), after which the user will be reminded again of the unanswered call (step 51). Alternatively, if the user reacts to the given reminder, it is checked whether the user wants yet a new reminder of the unanswered call in question or whether he wants to stop the reminding function as for the unanswered call in question (step 54). In the event that the user wants a new reminder, a new reminding time will be set (step 53) either by the user or automatically, in which case the user will again be reminded of the unanswered call (step 51), after which it is re-checked whether the user wants yet a new reminder, etc. If the user wants no more reminders of the unanswered call in question, the information relating to the unanswered call in question will be removed from the memory unit and the reminding function will be terminated as regards this unanswered call dealt with (step 55).

As the user can carry with him the mobile phone all the time he will be able to have reminders just about any time of day he wishes, i.e. during office hours as well as out of office hours, and during weekends and vacations.

In a special situation, where the identifying of the telephone number of the caller of an incoming call does not succeed or where the CLI field (26) of the incoming data burst is empty, for example, calls coming from abroad, the user can preferably either be reminded of an unanswered or rejected call or, if the user so desires, not to be reminded of an unanswered call in this kind of situation. The user may preferably set the device always to remind of unanswered or rejected calls, wherein the CLI field is empty, or the user may set the device to remind of such a call when separately requested, or the user may set the device not to remind of an unanswered call in these kinds of situations.

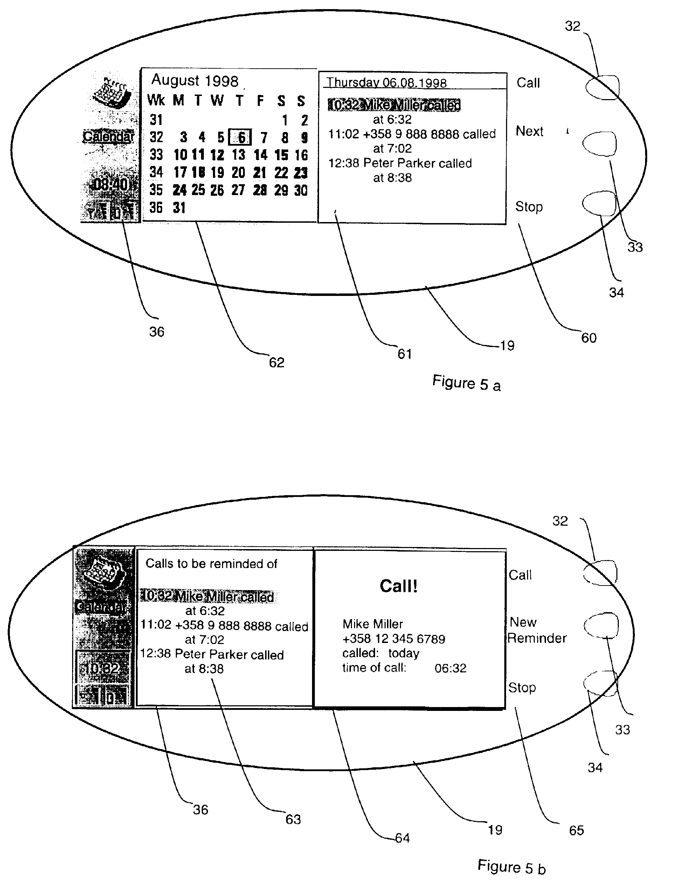

Figure 5a shows a preferred implementation that utilises an electronic calendar for reminding of an unanswered call. A user interface 19 of a mobile phone comprises a display 36. In Figure 5a, there is shown on the display by way of example a calendar application that the invention utilises. The calendar application may preferably comprise several different functional application parts on the display. For example, a first part 60 preferably informs here the functionality of SOFT keys 32-34 in the mobile phone's mode of operation in question. A second part 61 preferably shows on the display, for reminding the user, the day view of the calendar, on a day selected by the user, of the information with the times of reminding, referring to the calls left unanswered that he has received. A third part 62 preferably comprises the month view of the calendar.

Figure 5b shows a preferred implementation of a reminder to be given to a user through a display, on the basis of a pre-determined response. In the figure, said response is the reaching of the point of time of reminding. A user interface 19 of a mobile phone comprises a display 36. In Figure 5b, the display 36 is divided into three different functional parts. In this case, a first part 63 gives a summary of the inrofmation referring to the unanswered calls to be reminded of, in the form of a list. Said list preferably comprises, for example, the identification information of an unanswered call (e.g. the name or telephone number of the caller) and other information, such as, e.g. the time of reminding and the time the call was received. A second part 64 preferably informs the user of the more detailed identification information referring to the call, and a third part of the display 65 informs the functionality of SOFT keys 32-34 in the mobile phone's mode of operation in question.

This paper presents the implementation and embodiments of the present invention, with the help of examples. A person skilled in the art will appreciate that the present invention is not restricted to details of the embodiments presented above, and that the invention can also be implemented in another form without deviating from the characteristics of the invention. The embodiments presented above should be considered illustrative, but not restricting. Thus, the possibilities of implementing and using the invention are only restricted by the enclosed claims. Consequently, the various options of implementing the invention as determined by the claims, including the equivalent implementations, also belong to the scope of the invention.

## Claims

1. A mobile phone comprising means (11-14) for receiving a call, identification means (18) for identifying the number of the caller from the call that comes into the device, a clock (17) for determining the course of time, and a memory unit (20) for storing information, **characterised** in that there is a functional connection between the identification means (18) and the memory unit (20), the identification means (18) are arranged to transfer information referring to the number of the caller of an unanswered call into the memory unit (20) on the basis of a first response, when the call is not answered, and the memory unit (20) is arranged to remind the user of the mobile phone of the unanswered call, on the basis of a second response obtained from the clock (17), of the reaching of a specific point of time.

2. A mobile phone according to claim 1, **characterised** in that said memory unit is a calendar.

3. A mobile phone according to claim 1, **characterised** in that said first response is one of the following cases,
said leaving a call unanswered,
rejecting a call that comes into the mobile phone, by pressing a specific selector.

4. A mobile phone according to claim 1, **characterised** in that the mobile phone is arranged to also give said reminder in one of the following cases,
when the user changes the mode of operation of the mobile phone from a first mode of operation into a second mode of operation,
when the user switches on the current in the mobile phone,
when the user starts using the mobile phone, and
when the user separately informs the mobile phone that he wants the reminders of unanswered calls at the point of time in question by giving a pre-determined command.

5. A mobile phone according to claim 1, **characterised** in that said reminder is given in at least one of the following forms
with a sound signal,
with text or picture that appears on the display,
with a light signal,
with a tactile alert,

6. A mobile phone according to claim 2, **characterised** in that the mobile phone is arranged to give said reminder as a calendar note.

7. A mobile phone according to claim 1, **characterised** in that the mobile phone further comprises a user interface (19), which user interface (19) is arranged to enable the user of the mobile phone to participate in the transferring procedure of the information referring to the number of the caller of an unanswered call from the caller number identification means (18) into the memory unit (20) and to determine properties of the reminding function.

8. A mobile phone according to claim 2, **characterised** in that the mobile phone further comprises alerting means (22) for starting the call creation, there is a functional connection between the call creation means (22) and the calendar (20), the alerting means are arranged to receive the information referring to a telephone number from the calendar, and the alerting means are arranged to start the alerting on the basis of the information they receive from the calendar.

9. A method for reminding of unanswered calls in a mobile phone, in which method a call comes into the mobile phone, the telephone number of the caller is identified from the call that comes into the mobile phone, **characterised** in that the method comprises
leaving the call unanswered,
transferring information referring to the telephone number of the caller of an unanswered call into a memory unit on the basis of a first response, and
reminding the user of the unanswered call at a later point of time.

10. A method according to claim 9, **characterised** in that said first response is one of the following cases,
the user leaves a call coming into the mobile phone unanswered, and
the user rejects an incoming call by separately pressing a reminding selector.

11. A method according to claim 9, **characterised** in that said memory unit is a calendar.

12. A method according to claim 9, **characterised** in that the method comprises
giving said reminder in at least one of the following forms:
with a sound signal, with text or picture appearing on the display, with a light signal, with a tactile alert, with a note made at a specific point of time in the calendar.

13. A method according to claim 9, **characterised** in that the method comprises
giving said reminder also in at least one of the following cases:
the user changes a mode of operation of the mobile phone from a first mode of operation into a second mode of operation, the user switches on the current in his mobile phone, the user starts using the mobile phone, and the user separately informs the mobile phone that he wants the reminders at the point of time in question by giving a pre-determined command.

14. A method according to claim 11, **characterised** in that the method further comprises
initiating a call directly to the telephone number of the caller of an unanswered call in the calendar in response to a user procedure.

15. A method according to claim 9, **characterised** in that said reminder
is given again if the user has not called the telephone number that is the object of reminding due to the previous reminder or he has not acknowledged the reminding function to be stopped as regards the telephone number in question.
